# EUROPÄISCHE PATENTSCHRIFT

(11) **EP 3 688 862 B1**
(45) Veröffentlichungstag und Bekanntmachung des Hinweises auf die Patenterteilung: **12.10.2022**
(21) Anmeldenummer: 18830180.8
(22) Anmeldetag: 13.12.2018
(51) Int. Cl.: H02K 3/34, H02K 3/30, H02K 15/10, H01F 27/32

(54) **ISOLIERUNG VON TEILLEITERN EINER DYNAMOELEKTRISCHEN MASCHINE**
ISOLATION OF SUB-CONDUCTORS OF A DYNAMOELECTRIC MACHINE
ISOLATION DES CONDUCTEURS PARTIELS D'UNE MACHINE DYNAMOÉLECTRIQUE

(30) Priorität: 20.12.2017 EP 17208914
(43) Veröffentlichungstag der Anmeldung: 05.08.2020
(73) Patentinhaber: Flender GmbH, 46395 Bocholt (DE)
(72) Erfinder: BRENNER, Robin, 94148 Kirchham (DE); LÜTKE, Harry, 90409 Nürnberg (DE); SCHÖNBAUER, Norbert, 94072 Bad Füssing (DE)
(74) Vertreter: Michalski Hüttermann & Partner Patentanwälte mbB
(86) Internationale Anmeldenummer: PCT/EP2018/084666
(87) Internationale Veröffentlichungsnummer: WO 2019/121279

(56) Entgegenhaltungen:
- EP-A2- 1 100 178
- WO-A1-97/30506
- DE-C- 271 686
- FR-A- 397 892
- FR-A- 1 534 678
- JP-A- 2008 193 860
- US-A- 1 118 446
- US-A1- 2008 007 133

## Beschreibung

Die Erfindung betrifft eine dynamoelektrische Maschine nach dem Oberbegriff des Anspruchs 1.

Bei dynamoelektrischen Maschinen, beispielsweise Elektromotoren oder Generatoren, sind die Wicklungssysteme aus einzelnen Spulen aufgebaut. Die einzelnen Leiter der Spule sind dabei gegeneinander isoliert. Insbesondere müssen diese einzelnen Teilleiter eines Leiters eine sogenannte Windungsisolation aufweisen, die im Regelfall nur für vergleichsweise geringe Spannungen von maximal 80 V ausgelegt ist. Eine derartige Teilleiterisolation erfolgt beispielsweise durch mit auf Leiter aufgebrachtem Isolierlack und/oder (Polyester-)GlasFaser-Umspinnung.

Die Leiter sind erfahrungsgemäß aus Kupfer oder Aluminium hergestellt, wobei die Leiter mit Lack rundum isoliert sind und/oder (Polyester-)Glas-Faser-Umspinnung aufweisen. Alternativ kann der Leiter auch eine rundum-vorhandene Bandisolierung aufweisen.

Nachteilig dabei ist, dass bei Anordnung der Teilleiter der Leiter einer Spule in der Nut sich die Windungsisolationen gegenseitig in ihrer Dicke aufsummieren und sich somit der verfügbare Kupferfüllfaktor in der Nut reduziert.

Aus der US 2008/0007133 A1 ist dynamoelektrische Maschine mit den Merkmalen des Oberbegriffs des Anspruchs 1 bekannt, deren Teilleiterisolierungen eben ausgeführt sind.

Ausgehend davon liegt der Erfindung die Aufgabe zugrunde, ein Wicklungssystem für einen Stator bereitzustellen, das eine einfache Fertigung der Spulen bei gleichzeitiger Erhöhung des Kupferfüllfaktors in den Nuten des Stators gewährleistet.

Die Lösung der gestellten Aufgabe gelingt durch eine dynamoelektrische Maschine mit den Merkmalen des Anspruchs 1 oder des Anspruchs 2.

Die Lösung der gestellten Aufgabe gelingt ebenso durch ein Verfahren zur Herstellung eines Stators einer dynamoelektrischen Maschine mit den in Anspruch 3 angegebenen Schritten. Erfindungsgemäß werden nun die einzelnen Teilleiter lediglich in Umfangsrichtung betrachtet partiell isoliert.

Es befindet sich somit zwischen den Teilleitern eines Leiters erfindungsgemäß nur eine Isolationsschicht - also Teilleiterisolationsschicht. Blanke Seiten eines angrenzenden Teilleiters liegen an isolierten Seiten der direkt benachbarten Teilleiter, so dass zwischen den einzelnen Teilleitern immer eine Mindestisolation gegeben ist.

Bei radial übereinander angeordneten Teilleitern in einer Nut eines Stators liegt somit jeweils eine blanke Seite eines zweiten Teilleiters auf einer Isolierung eines ersten Teilleiters usw., so dass auch hier zwischen den einzelnen Teilleitern immer eine Mindestisolation gegeben ist.

Das Wicklungssystem des Stators weist aber weiterhin grundsätzlich eine Hauptisolation auf.

Erfindungsgemäß sind vor allem bei einer radialen Anordnung dieser Teilleiter in der Nut und bei einem rechteckigen Querschnitt dieser Teilleiter lediglich die Oberseite oder die Unterseite der Teilleiter mit einer Isolierung zu versehen. Die Isolierung der Teilleiter erfolgt als Bandisolierung oder als Lackisolierung.

Erfindungsgemäß ist diese Isolierung der Teilleiter noch über die angrenzenden Kantenradien dieser bedeckten Seiten der Teilleiter gezogen ist. Damit ist - im Querschnitt betrachtet - eine Seite des Teilleiters unbedeckt, eine Seite bedeckt und zwei Seiten jeweils zum Teil bedeckt.

Durch die erfindungsgemäße Ausgestaltung der Teilleiterisolierung reduziert sich das notwendige Volumen der Isolierung in der Nut bei gleichzeitiger Erhöhung des Kupferfüllfaktors oder Aluminiumfüllfaktors also der elektrisch verfügbare Leitungsquerschnitt.

Die Teilleiter weisen im Querschnitt betrachtet in der Nut, nur eine teilweise Bedeckung durch die Teilleiterisolierung auf. Die Teilbedeckung beträgt ca. 30 bis 70 % des Umfangs des Teilleiters - je nach Querschnittsform des Teilleiters. Grundsätzlich weisen die Teilleiter einen vergleichsweise gut "stapelbaren" Querschnitt auf, es wird dabei vor allem eine im Wesentlichen rechteckförmige oder quadratische Querschnittsfläche der Teilleiter verwendet werden.

Dabei sind die Kanten der Teilleiter abgerundet, um die Teilleiterisolation nicht zu beschädigen.

Innerhalb einer Nut sind die Teilleitern eines Leiters radial bzw. vertikal , oder vertikal und horizontal angeordnet. Als radial wird dabei die Anordnung der Teilleiter von einem Nutgrund in Richtung Luftspalt einer dynamoelektrischen Maschine verstanden. Während unter einer horizontalen Anordnung der Teilleiter eine bzgl. des Luftspaltes im Wesentlichen tangentiale Anordnung verstanden wird.

Bei Teilleitern mit rechteckiger Querschnittsform und insbesondere radialer Anordnung in einer Nut, bei der die Schmalseiten der Teilleiter aneinandergrenzen, wird die Teilbedeckung geringer sein, als bei einer Ausführung wo die Längsseiten eines rechteckförmigen Teilleiters über einander liegen.

Axial außerhalb der Nut, also im Bereich des Wickelkopfes kann die Bedeckung und/oder die Anordnung der Teilleiter des Leiters wie in der Nut ausgeführt sein.

Aufgrund des, je nach Maschinentyp ausgeführten Wickelkopfdesigns kann es notwendig sein im Wickelkopfbereich den Bedeckungsgrad zu ändern.

Die Isolation der Teilleiter ist Abdeckung vorzugsweise eine Folie, insbesondere aus Polyimid, die mit einem (Schmelz-) Kleber, z.B. FEP (Fluorethylen-Propylen)versehen ist und an den Teilleitern positioniert, insbesondere verklebt ist.

Die Abdeckung, insbesondere die Folie ist dabei koronabeständig ausgeführt, was beispielsweise durch dementsprechende Einlagerung geeigneter Partikel erfolgt.

Die Erfindung sowie vorteilhafte Ausgestaltungen der Erfindung werden anhand eines Ausführungsbeispiels näher erläutert. Darin zeigt:
- FIG 1: eine prinzipielle dynamoelektrische Maschine,
- FIG 2: einen Nutquerschnitt einer Hochspannungsisolierung,
- FIG 3: eine Spule mit einzelnen Teilleitern,
- FIG 4: eine Detaildarstellung eines Teilleiters,
- FIG 5: eine weitere Spule mit Teilleitern.

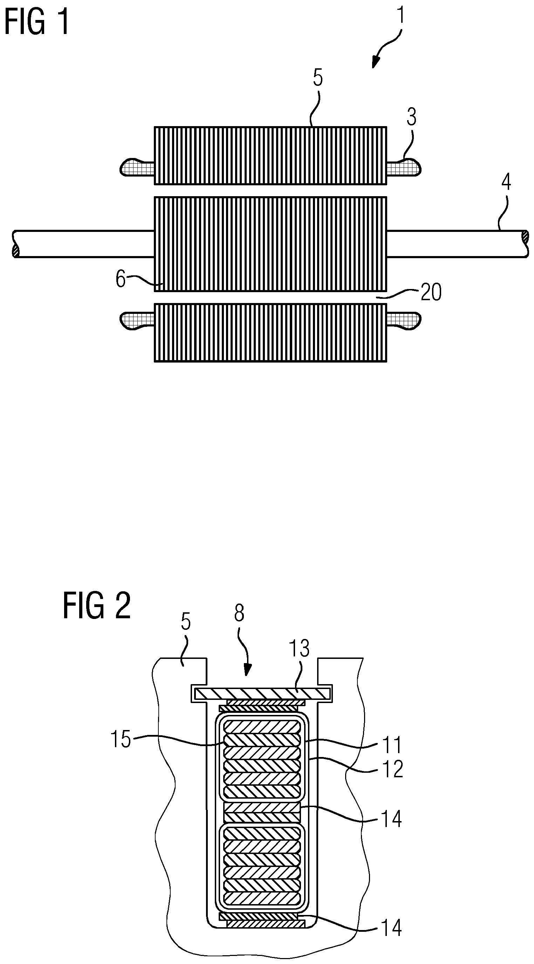

FIG 1 zeigt einen prinzipiellen Längsschnitt einer dynamoelektrischen Maschine 1 mit einem Stator 5, der durch einen Luftspalt 20 von einem Rotor 6 beabstandet ist, wobei der Rotor 6 mit einer Welle 4 drehfest verbunden ist und um eine Achse drehbar gelagert ist.

Dem Luftspalt 20 zugewandt befindet sich im Stator 5 ein in nicht näher dargestellten Nuten angeordnetes Wicklungssystem, das an den Stirnseiten des Stators 5 Wickelköpfe 3 ausbildet.

Ein bisher bekanntes, beispielhaft dargestelltes Wicklungssystem gemäß FIG 2 weist in einer Nut 8 Leiter 10 mit jeweils Teilleiter 9 auf, wobei in diesem Fall eine Zweischichtwicklung vorliegt. Jede Schicht weist somit einen Leiter 10 mit Teilleitern 9 auf, die von einem Nutfüllstoff 14 sowohl zum Nutgrund als auch zwischen den beiden Leitern 10, ebenso wie zwischen dem obersten Leiter und einem Nutverschlusskeil 13 angeordnet ist.

Jeder Teilleiter 9 weist dabei eine ihn umgebende Teilleiterisolierung 15 auf, die die vorhandene Windungsisolation übernimmt und die bei Hochspannungsmaschinen im Bereich von ca. 80 bis 100 V liegt. Jeder Leiter 10 ist von einer Hauptisolierung 11 umgeben, wobei das gesamte Wicklungssystem in dieser Nut 8 von einer Nutisolation 11 gegenüber dem Blechpaket des Stators 5 ebenfalls isoliert ist.

Durch den beschriebenen Aufbau weist jede Teilleiterisolierung 15 Schichtdicken auf, die sich über die radiale Höhe des Leiters 10 in der Nut 8 summieren und so zu einem reduzierten Kupferfüllfaktor des Wicklungssystems innerhalb der Nut führen.

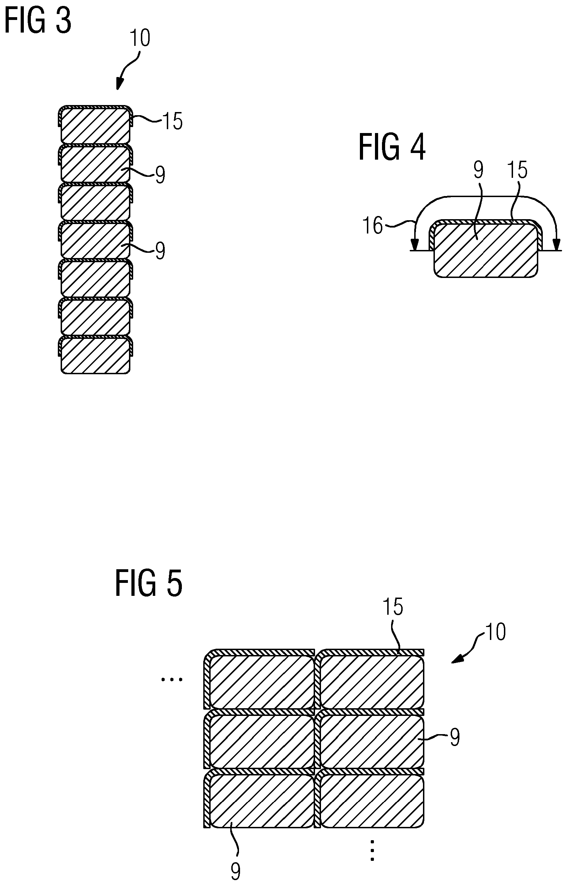

Erfindungsgemäß wird nunmehr gemäß FIG 3 bei einer Spule, die zumindest einen Leiter 10 aufweist und dessen Teilleiter 9 radial übereinander angeordnet sind, jeweils nur eine einseitige Teilleiterisolation 15 aufgebracht, so dass lediglich eine erforderliche Mindestisolation zwischen den einzelnen Teilleitern 9 vorhanden ist.

FIG 4 zeigt in einer näheren Darstellung einen im Wesentlichen rechteckförmig geformten Teilleiter 9, der im Querschnitt betrachtet eine teilweise Bedeckung durch eine Teilleiterisolierung 15 aufweist. Die Teilbedeckung beträgt ca. 30 bis 70 % des Umfangs des Teilleiters 9 - je nach Querschnittsform der Teilleiter 9.

Mit anderen Worten: bei Teilleitern 9 mit rechteckiger Querschnittsform und insbesondere radialer Anordnung in der Nut 8, bei der die Schmalseiten der Teilleiter 9 aneinandergrenzen, wird die Teilbedeckung geringer sein, als bei der Ausführung gemäß FIG 3, wo die Längsseiten der Teilleiter 9 aneinandergrenzen.

Die Isolation an den Teilleitern 9 ist vorzugsweise eine Folie, insbesondere aus Polyimid, die mit einem (Schmelz-) Kleber, z.B. FEP (Fluorethylen-Propylen)versehen ist und an den Teilleitern 9 positioniert, insbesondere verklebt ist.

Grundsätzlich weisen die Teilleiter 9 eine im Wesentlichen rechteckförmige oder quadratische Querschnittsfläche auf. Dabei sind die Kanten der Teilleiter 9 abgerundet, um die Teilleiterisolation 15 nicht zu beschädigen. Innerhalb einer Nut 8 sind die Teilleitern 9 eines Leiters 10 radial bzw. vertikal, oder vertikal und horizontal angeordnet.

FIG 5 zeigt in einer weiteren Ausführung einen Leiter 10 mit horizontal und vertikal angeordneten Teilleitern 9. Es sind dabei - im Querschnitt betrachtet - zwei Seiten des rechteckförmigen Teilleiters 9 mit einer Teilleiterisolierung 15 versehen. Die an diese Teilleiterisolierung 15 angrenzenden Teilleiter 9 weisen auf diesen Seiten erfindungsgemäß keine Teilleiterisolierung 15 auf. Es ist jedoch - wie beispielsweise in FIG 3 oder FIG 4 dargestellt - eine Überdeckung der angrenzenden Kanten des jeweiligen Teilleiters 9 möglich.

Der erfindungsgemäße Gedanke ist für Einschicht-, Zweischicht-, oder Mehrschichtwicklungen im Stator 5 geeignet. förmigen Teilleiters 9 mit einer Teilleiterisolierung 15 versehen. Die an diese Teilleiterisolierung 15 angrenzenden Teilleiter 9 weisen auf diesen Seiten erfindungsgemäß keine Teilleiterisolierung 15 auf. Es ist jedoch - wie beispielsweise in FIG 3 oder FIG 4 dargestellt - eine Überdeckung der angrenzenden Kanten des jeweiligen Teilleiters 9 möglich.

Der erfindungsgemäße Gedanke ist für Einschicht-, Zweischicht-, oder Mehrschichtwicklungen im Stator 5 geeignet.

## Patentansprüche

1. Dynamoelektrische Maschine (1) mit einem Stator (5) und einem Rotor (6) und mit einem in Nuten (8) des Stators (5) angeordnetem Wicklungssystem (3), das pro Phase einzelne miteinander elektrisch kontaktierbare Spulen aufweist, wobei jeder Leiter (10) der Spule aus mehreren Teilleitern/Windungen aufgebaut ist, wobei diese Teilleiter (9) voneinander isoliert sind, in dem die Teilleiter (9) zu dem oder den benachbarten Teilleitern (9) ihres Leiters (10) der jeweiligen Nut (8) lediglich eine Isolationsschicht (15) aufweisen, wobei die Teilleiter (9) eine im Wesentlichen rechteckförmige oder quadratische Querschnittsfläche aufweisen, wobei die Isolationsschicht (15) entweder eine auf den Teilleiter (9) geklebte Folie oder eine Lackisolierung ist, wobei jeder Leiter (10) von einer Hauptisolation (11) umgeben ist, **dadurch gekennzeichnet, dass** die Kanten der Teilleiter (9) abgerundet sind und dass
bei einer Anordnung der Teilleiter (9) nur radial übereinander die Teilleiter (9) nur von einer einseitigen Isolationsschicht (15) bedeckt sind, die über die angrenzenden Kantenradien der durch die Isolationsschicht (15) bedeckten Seite reicht, und
bei einer Anordnung der Teilleiter (9) radial und horizontal über- und nebeneinander die Teilleiter (9) nur von einer zweiseitigen Isolationsschicht (15) bedeckt sind, die auch über die angrenzenden Kantenradien der durch die Isolationsschicht (15) bedeckten Seiten reichen kann.

2. Dynamoelektrische Maschine nach Anspruch 1,
**dadurch gekennzeichnet , dass** die Bedeckung des Teilleiters (9) durch die Isolationsschicht im Querschnitt betrachtet zwischen 30 und 70% liegt.

3. Verfahren zur Herstellung eines Stators (5) einer dynamoelektrischen Maschine (1) nach Anspruch 1,
**gekennzeichnet durch** folgende Schritte:
- Bereitstellen eines in Anspruch 1 beschriebenen Teilleiters (9), wobei die Teilleiter (9) eine im Wesentlichen rechteckförmige oder quadratische Querschnittsfläche aufweisen, deren Kanten abgerundet sind,
- partielles Aufbringen einer Isolationsschicht (15) auf den Teilleiter (9), insbesondere mit einer vorgebbaren Bedeckung des Querschnitts von 30 bis 70%, wobei die Isolationsschicht (15) entweder eine auf den Teilleiter (9) geklebte Folie oder eine Lackisolierung ist,
- Anordnen der Teilleiter (9) eines Leiters (10) derart, dass zwischen dem oder den benachbarten Teilleitern (9) des Leiters (10) lediglich eine Isolationsschicht (15) vorhanden ist,
- Einsetzen der in Anspruch 1 beschriebenen Teilleiter (9) eines Leiters (10) einer Spule nur radial übereinander oder radial und horizontal über- und nebeneinander in die Nut (8) eines Stators (5) einer dynamoelektrischen Maschine (1), wobei jeder Leiter (10) von einer Hauptisolation (11) umgeben ist.

## Claims

1. Dynamo-electric machine (1) comprising a stator (5) and a rotor (6) and comprising a winding system (3) which is arranged in slots (8) of the stator (5) and which has individual mutually electrically contactable coils for each phase, wherein each conductor (10) of the coil is built up from a plurality of sub-conductors/windings, wherein these sub-conductors (9) are insulated from one another in that the sub-conductors (9) have only one insulating layer (15) relative to the adjacent sub-conductor or conductors (9) of its conductor (10) of the respective slot (8), wherein the sub-conductors (9) have a substantially rectangular or square cross-sectional area, wherein the insulating layer (15) is either a film stuck onto the sub-conductor (9) or a varnish insulation, wherein each conductor (10) is surrounded by a main insulation (11), **characterized in that** the edges of the sub-conductors (9) are rounded and **in that**
when the sub-conductors (9) are arranged only radially above one another, the sub-conductors (9) are covered only by a single-sided insulating layer (15), which reaches over the adjacent edge radii of the side covered by the insulating layer (15), and
when the sub-conductors (9) are arranged radially and horizontally above and beside one another, the sub-conductors (9) are covered only by a two-sided insulating layer (15), which can also reach over the adjacent edge radii of the sides covered by the insulating layer (15).

2. Dynamo-electric machine according to Claim 1, **characterized in that** the coverage of the sub-conductor (9) by the insulating layer, viewed in cross section, is between 30 and 70%.

3. Method for producing a stator (5) of a dynamo-electric machine (1) according to Claim 1,
**characterized by** the following steps:
- providing a sub-conductor (9) described in Claim 1, wherein the sub-conductors (9) have a substantially rectangular or square cross-sectional area, the edges of which are rounded,
- partially applying an insulating layer (15) to the sub-conductor (9), in particular with a predefinable coverage of the cross section of 30 to 70%, wherein the insulating layer (15) is either a film stuck onto the sub-conductor (9) or a varnish insulation,
- arranging the sub-conductors (9) of a conductor (10) in such a way that there is only one insulating layer (15) between the adjacent sub-conductor or sub-conductors (9) of the conductor (10),
- inserting the sub-conductors (9) described in Claim 1 of a conductor (10) of a coil only radially above one another or radially and horizontally above and beside one another into the slot (8) of a stator (5) of a dynamo-electric machine (1), wherein each conductor (10) is surrounded by a main insulation (11).

## Revendications

1. Machine dynamoélectrique (1) comprenant un stator (5) et un rotor (6) et un système d'enroulements (3) qui est disposé dans des rainures (8) du stator (5) et qui comporte pour chaque phase des bobines individuelles qui peuvent être en contact électrique les unes avec les autres, chaque conducteur (10) de la bobine étant constitué d'une pluralité de conducteurs/d'enroulements élémentaires, ces conducteurs élémentaires (9) étant isolés les uns des autres en ce que les conducteurs élémentaires (9) ne comportent qu'une seule couche d'isolation (15) par rapport au ou aux conducteurs élémentaire adjacents (9) de leur conducteur (10) de la rainure respective (8), les conducteurs élémentaires (9) ayant une section transversale sensiblement rectangulaire ou carrée, la couche d'isolation (15) étant soit un film collé au conducteur élémentaire (9) soit une isolation laquée, chaque conducteur (10) étant entouré d'un isolant principal (11), **caractérisée en ce que** les bords des conducteurs élémentaires (9) sont arrondis et **en ce que**
dans le cas d'un agencement de conducteurs élémentaires (9) uniquement radialement les uns au-dessus des autres, les conducteurs élémentaires (9) ne sont recouverts que d'une couche d'isolation unilatérale (15) qui s'étend sur les rayons de bord adjacents du côté qui est recouvert par la couche d'isolation (15), et
dans le cas d'un agencement des conducteurs élémentaires (9) radialement les uns au-dessus et horizontalement les uns à côté des autres, les conducteurs élémentaires (9) ne sont recouverts que par une couche d'isolation bilatérale (15) qui peut également s'étendre sur les rayons de bord adjacents des côtés qui sont recouverts par la couche d'isolation (15).

2. Machine dynamoélectrique selon la revendication 1, **caractérisée en ce que** le recouvrement du conducteur élémentaire (9) par la couche d'isolation est compris entre 30 et 70 % vu en coupe transversale.

3. Procédé de fabrication d'un stator (5) d'une machine dynamoélectrique (1) selon la revendication 1, **caractérisé par** les étapes suivantes :
- fournir un conducteur élémentaire (9) décrit dans la revendication 1, les conducteurs élémentaires (9) ayant une section transversale sensiblement rectangulaire ou carrée à bords arrondis,
- appliquer partiellement une couche d'isolation (15) sur le conducteur élémentaire (9), en particulier avec un recouvrement spécifiable de section transversale de 30 à 70 %, la couche d'isolation (15) étant soit un film collé au conducteur élémentaire (9) soit une isolation laquée,
- disposer les conducteurs élémentaires (9) d'un conducteur (10) de manière à ce qu'une couche d'isolation (15) soit présente entre le ou les conducteurs élémentaires adjacents (9) du conducteur (10),
- insérer les conducteurs élémentaires (9), décrits à la revendication 1, d'un conducteur (10) d'une bobine uniquement radialement les uns au-dessus des autres ou radialement les uns au-dessus des autres et horizontalement les uns à côté des autres dans la rainure (8) d'un stator (5) d'une machine dynamoélectrique (1), chaque conducteur (10) étant entouré d'un isolant principal (11).
